# EUROPÄISCHE PATENTANMELDUNG

(11) **EP 4 674 592 A1**
(43) Veröffentlichungstag der Anmeldung: **07.01.2026**
(21) Anmeldenummer: 24186550.0
(22) Anmeldetag: 04.07.2024
(51) Int. Cl.: B29C 48/27, B29C 48/05, B29C 48/14, B29C 48/345, B29C 48/92

(54) **VERFAHREN UND VORRICHTUNG ZUR HERSTELLUNG VON POLYMERSTRÄNGEN MITTELS EINES FORMWERKZEUGS**

(71) Anmelder: Feddem GmbH & Co. KG, 53489 Sinzig (DE)
(72) Erfinder: Constroffer, David, 53489 Bad Breising (DE); Groß, Dieter, 64319 Pfungstadt (DE)
(74) Vertreter: Meissner Bolte Partnerschaft mbB

(57) **Zusammenfassung**

Die Erfindung betrifft ein Verfahren und eine Einrichtung zum Lösen von Verkrustungen und Anwachsungen von Kunststoffmaterial an Auslassdüsen einer Düsenplatte (2) eines Formwerkzeugs (1) zur Herstellung von Polymersträngen (6). Dazu ist ein Gestell (4) mit einer Gebläseanordnung (18) und einer Heizeinrichtung (17) zur Erzeugung eines Fluidstroms, der über eine Verteilerdüse (7) auf die Auslassdüsen gerichtet werden kann, vorgesehen. Das Gestell (4) ist seitlich und in der Höhe in Bezug auf das Formwerkzeug (1) festlegbar. Die Verteilerdüse (7) kann zu Wartungszwecken und zur Wiederaufnahme eines unterbrochenen Polymerstrangs aus dem Bereich der Austrittsdüsen entfernt werden, ohne dass das Gestell (4) von dem Formwerkzeug (1) zu entfernen ist.

## Beschreibung

Die Erfindung betrifft ein Verfahren und eine Vorrichtung zur Herstellung von Polymersträngen mittels eines Formwerkzeugs, sowie eine Vorrichtung, die geeignet ist, Ablagerungen an Auslassdüsen eines derartigen Formwerkzeugs zu lösen, gemäß den Oberbegriffen der Ansprüche 1, 8 und 9.

Zur Imprägnierung von Faserbündeln ist aus der EP 33470196 A1 eine Einrichtung bekannt, bei der in einen spaltförmigen Einlauf einer Imprägniereinheit eine Vielzahl von parallel verlaufenden Faserbündel eingeführt und durch einen wellenförmigen Kanal hindurchgeführt werden, in dem die Faserbündel mit einer Polymerschmelze durchtränkt und imprägniert werden. Am Ende des wellenförmigen Kanals befindet sich eine Düsenplatte, aus der die durchtränkten Faserbündel als parallel verlaufende Stränge austreten, weiteren Verarbeitungsschritten unterworfen und nach ihrer Abkühlung einer Granuliereinheit zugeführt werden.

Die imprägnierten Stränge verlassen die Düsenplatte bei einer Temperatur, die über der Schmelztemperatur der jeweilig verwendeten Polymerschmelze liegt. Trotz Verwendung bevorzugter Düsenprofilierungen bzw. Austrittsöffnungen der Düsenplatte kommt es häufig zu Ablagerungen von erstarrter Polymerschmelze oder Krustenbildung an den Rändern der Austrittsdüsen, die so stark werden können, dass ein imprägnierter Strang abreißen kann und damit den Produktionsprozess erheblich beeinträchtigen oder unterbrechen kann. In Folge des Abrisses kann auch eine längere Strecke des imprägnierten Stranges nutzlos werden und ist später zu entsorgen. Es besteht daher der Wunsch, die zu überbrückende Zeit, bis der Strang ohne größere Verluste wieder in den Produktionsprozess einlaufen kann, so klein wie möglich zu halten und durch geeignete konstruktive Maßnahmen die Häufigkeit von Störungen zu verringern.

In ähnlicher Weise lassen sich Polymerstränge ohne eingebundene Fasern aus einem Extruder ausgeben.

Aus der DE 102011106709 A1 sind ein Verfahren und eine Vorrichtung zum Herstellen von Granulatkörpern bekannt, bei denen aus einer Düsenanordnung austretende Stränge einer Schmelze eines thermoplastischen Kunststoffmaterials von einem Anströmfluid, insbesondere Luft oder Stickstoff, angeströmt werden, wobei die Lage der Anströmdüse in Bezug auf die Düsenanordnung verschwenkbar ausgestaltet ist, so dass die Stränge nur im Bereich des Austritts aus der Düsenplatte angeströmt werden. Bei diesem Gegenstand ist die Anströmdüse der Düsenplatte fest zugeordnet.

Die WO2018/050674 A1 beschreibt ein Verfahren, bei dem Anwachsungen von Kunststoffmaterial von extrudierten Kunststoffen zur Herstellung von Granulat an den Düsenausgängen dadurch beseitigt werden können, dass die Düsenausgänge mittels elektromagnetischer Strahlung derart aufgeheizt werden, dass das störende Material über dessen Zersetzungstemperatur erhitzt und damit unschädlich gemacht wird. Restmaterial ist dabei mittels eines Abstreifers zu entfernen. Ein Nachteil dieses Vorschlags liegt darin, dass durch die Strahlung nicht nur das angewachsene Kunststoffmaterial erhitzt wird, sondern auch die die Austrittsdüsen enthaltende Düsenplatte selbst, so dass sich eine unnötige Aufheizung des Kunststoffstrangs ergibt und damit die Gefahr des Abrisses eines Kunststoffstrangs erhöht wird.

Der Erfindung liegt die Aufgabe zugrunde, ein Verfahren und eine Vorrichtung zur Vermeidung von Störungen an Austrittsdüsen an einer Einrichtung zur Herstellung von Polymersträngen anzugeben, welche sowohl die Zahl des Auftretens von Strömungsstörungen und Verschmutzungen an den Austrittsdüsen verringert als auch die Qualität der Polymerstränge verbessert sowie die erforderliche Zeitdauer verringern kann, bis eine unterbrochene Ausgabe eines Polymerstrangs wieder aufgenommen werden kann.

Diese Aufgabe wird durch die in den Ansprüchen angegebene Erfindung gelöst Vorteilhaften Weiterbildungen der Erfindung sind in Unteransprüchen der jeweiligen Hauptansprüche angegeben.

Die Erfindung geht aus von einem Verfahren zur Herstellung von Polymersträngen mittels eines Formwerkzeugs, aus dem eine Mehrzahl von parallel geführten Polymersträngen über eine Reihe von in einer Düsenplatte des Formwerkzeugs aufgenommenen Austrittsdüsen ausgetragen werden, wobei der die Austrittsdüsen enthaltende Bereich der Düsenplatte mittels eines aus einer Heizeinrichtung austretendenden gasförmigen Fluids erhitzt wird.

Gemäß der Erfindung liegt die Temperatur des Fluids über der Schmelztemperatur des Polymerkunststoffes, wobei die Sprührichtung des aus einer schlitzförmigen Verteilerdüse austretenden Fluids derart einstellbar ist, dass die Sprühebene des Fluids oberhalb der Ebene der Faserstränge im spitzen Winkel zur Ebene der Düsenplatte und im spitzen Winkel zur Ebene der Faserstränge verläuft.

Die Verteilerdüse ist in einem dem Formwerkzeug zugeordneten Gestell aufgenommen, das dem Formwerkzeug ortsfest zugeordnet werden kann, wobei die Verteilerdüse zwischen einer Betriebsstellung zur Besprühung des Bereichs der Austrittsdüsen und einer Ruhestellung innerhalb des Gestells derart verlagerbar ist, dass in der Ruhestellung der Bereich der Austrittsdüsen von der Verteilerdüse freigehalten ist.

Bei der Erfindung kann die Verteilerdüse dem Formwerkzeug mobil, aber ortsfest zugeordnet werden. Der Winkel der Sprühebene ist derart einstellbar, dass er bei der Verwendung oberhalb der Ebene der Faserstränge im spitzen Winkel zur Ebene der Düsenplatte und im spitzen Winkel zur Ebene der Polymerstränge verläuft, so dass eine größtmögliche Effizienz zum Lösen von Anlagerungen an den Düsenausgängen erreichbar ist.

Ein weiterer Vorteil der Erfindung wird dadurch erreicht, dass die Verteilerdüse zwischen einer Arbeitsstellung und einer Ruhestellung verlagerbar ist. Wenn sich im Betrieb der Vorrichtung ergibt, dass ein Polymerstrang beschädigt oder unterbrochen ist, kann die Verteilerdüse schnell aus dem Bereich der Austrittsdüsen entfernt werden, so dass ein einfacher Zugang zu den Austrittsdüsen ermöglicht ist, um das neu entstandene Polymerstrangende zu erfassen und in die weiteren Verarbeitungsstufen zu überführen und um dadurch eine schnelle Wiederaufnahme des Betriebs der Vorrichtung zu erreichen. Das die Verteilerdüse enthaltende Gestell kann dabei ortsfest dem Formwerkzeug zugeordnet bleiben, da lediglich ein die Verteilerdüse einhaltendes Modul in dem Gestell verlagert wird.

Weiterbildende Ausführungsformen sind in den Unteransprüchen angegeben.

Vorzugsweise wird das Fluid, insbesondere Luft oder Stickstoff, mittels eines Gebläses ausgeblasen und über eine nachgeschaltete Heizeinrichtung an die Verteilerdüse geliefert. Das Gebläse lässt sich derart steuern, dass die Aufheizzeit des Fluids bis zu einer gewünschten Solltemperatur möglichst klein gehalten wird. Dies wird dadurch erreicht, dass die Gebläseleistung nur stufenweise oder kontinuierlich erhöht wird, während an der Heizeinrichtung eine hohe Heizleistung eingestellt ist. Damit ist bereits bei geringer Gebläseleistung eine hohe Temperatur an der Verteilerdüse vorhanden, so dass die Vorrichtung nach einer Unterbrechung in kurzer Zeit wieder einsetzbar ist.

Durch geeignete Sensoren an der Verteilerdüse kann erreicht werden, dass die Temperatur des Fluids an der Düsenplatte oder zumindest am Austritt aus der Verteilerdüse konstant gehalten werden kann. Die Auftreffgeschwindigkeit des Fluids auf die Düsenplatte ist vorzugsweise variabel einstellbar oder pulsierend steuerbar.

Die Austrittsöffnung der Verteilerdüse ist vorzugsweise schlitz- oder linienförmig ausgebildet, kann aber auch strahlenförmig ausgebildet sein, um eine bessere Anpassung der Auftreffstelle des Fluids an den Ort der Auslassdüsen zu erreichen.

Zur Energieeinsparung kann vorzugweise wenigstens ein Teil des aus der Verteilerdüse ausgetretenen Fluidstroms, vorzugsweise nach Durchströmung einer Filteranordnung, auf den Ansaugkanal des Gebläses zurückgeführt oder einem anderen Wärmeverbraucher zugeführt werden.

Die erfindungsgemäße Vorrichtung ist vorzugsweise in einem Gestell aufgenommen, das in Bezug auf das Formwerkzeug mobil aber ortsfest verlagerbar ist, so dass eine Befestigung der Vorrichtung an dem Formwerkzeug nicht erforderlich ist. Bei Bedarf kann jedoch auch eine lösbare mechanische Verbindung mit dem Formwerkzeug hergestellt werden.

Die bevorzugte Ausbildung der Vorrichtung nach der Erfindung enthält eine Gebläseanordnung, aus der ein Fluidstrom über eine flexible Kanal- oder Wellrohrverbindung an eine Heizeinrichtung geliefert wird, aus der der aufgeheizte Fluidstrom an die Verteilerdüse geführt wird.

Eine schlittenförmige Verschiebevorrichtung enthält die Heizeinrichtung und die Verteilerdüse. Die Verschiebevorrichtung ist zwischen einer ersten Betriebsstellung (Arbeitsstellung) und einer zweiten Betriebsstellung (Ruhestellung) im Gestell verschiebbar. In der Ruhestellung sind das Gebläse und die Heizeinrichtung abschaltet, so dass sich das Gehäuse der Vorrichtung in Ruhestellung nicht aufheizen kann. Da durch die Rückführung der Verteilerdüse in das Gehäuse der Arbeitsbereich vor der Düsenplatte des Formwerkzeugs freigelegt ist, können in dieser Stellung Reinigungsarbeiten und die Arbeiten zur Wiederaufnahme unterbrochener Polymerstränge und ihre Rückführung in den Produktionsprozess durchgeführt werden.

Die Verteilerdüse ist vorzugsweise als Breitschlitzdüse ausgebildet, deren Auslass-Fluidstrom über die gesamte Breite der Reihe der Austrittsdüsen der Düsenplatte verläuft. Die seitliche Orientierung der erfindungsgemäßen Vorrichtung ist damit unkritisch.

Vorzugsweise ist der Anstellwinkel der Verteilerdüse gegenüber der Düsenplatte des Formwerkzeugs einstellbar, um einen optimalen Auftreffwinkel des Fluidstroms auf die Düsenöffnungen erreichen zu können.

Vorzugsweise ist eine Stellvorrichtung an der Verteilerdüse ausgebildet, durch die die Auslassbreite des Fluidstroms, insbesondere bei der Nutzung des Formwerkzeugs für eine beschränkte Zahl von Auslassdüsen, verkleinert werden kann, um den Fluidstrom auf das tatsächlich erforderliche Volumen beschränken zu können.

Bei der Rückführung der Verteilerdüse in die Ruhestellung kann der Rückführweg durch einen verstellbaren Anschlag begrenzt werden, da die Rückführweg nur soweit erforderlich ist, dass die Verteilerdüse aus dem Bereich der Austrittsdüsen vollständig entfernt ist.

Zur möglichst genauen Orientierung des Gestells gegenüber dem Formwerkzeug ist das Gestell über feststellbare Rollen rollbar und in der Höhe einstellbar ausgebildet.

Unter dem Begriff Polymerstränge sind nicht nur aus ungefülltem Polymer bestehende Stränge zu verstehen, sondern in gleicher Weise auch mit Polymerkunststoffen imprägnierte Faserbündel.

Die Erfindung wird nachstehend anhand eines Ausführungsbeispiels und begleitender Zeichnungen näher erläutert.

Es zeigen:
- Fig. 1: eine isometrische Darstellung einer Fertigungslinie zur Herstellung von Polymersträngen,
- Fig. 2: einen Ausschnitt A aus Figur 1,
- Fig. 3: eine Seitenansicht des Ausschnitts A aus Figur 1,
- Fig. 4: eine seitliche Detailansicht einer Düsenplatte, auf die eine Verteilerdüse gerichtet ist,
- Fig. 5: ein Gestell mit einer Verteilerdüse in Ruhestellung,
- Fig. 6: ein Gestell mit einer Verteilerdüse in Arbeitsstellung,
- Fig. 7: eine Ansicht des Gestells gemäß Figur 5 mit entfernten Verkleidungen,
- Fig. 8: eine Ansicht von Figur 7 bei Ausblendung des Gestellrahmens,
- Fig. 9: eine Ansicht von Figur 6 bei Ausblendung der Verkleidungen und des Gestellrahmens,
- Fig. 10: eine isometrische Ansicht eines Moduls mit Verteilerdüse und Heizeinrichtung in Ruhestellung,
- Fig. 11: eine isometrische Ansicht eines Moduls mit Verteilerdüse und Heizeinrichtung in Arbeitsstellung

Die Herstellung von Polymersträngen erfolgt in der Regel dadurch, dass eine Vielzahl von Polymersträngen parallel zueinander aus einem Formwerkzeug über eine Düsenplatte ausgeleitet werden, die in einer horizontalen Linie angeordnete Auslassdüsen für die Polymerstränge enthält. Die aus dem Formwerkzeug ausgetretenen Polymerstränge werden dann zur Abkühlung in ein Wasserbad 3 geleitet, an dessen Ende sie einer Weiterverarbeitung, z.B. einer Granulierung, unterworfen werden.

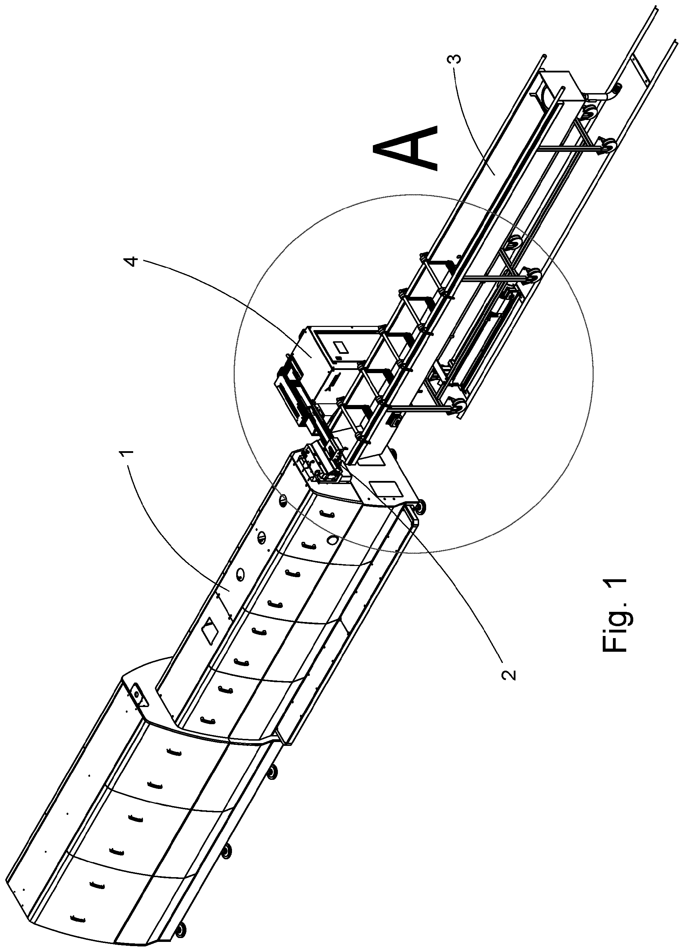

Figur 1 zeigt eine derartige Fertigungslinie. Die Polymerstränge werden über die Düsenplatte 2 ausgeleitet. An den Rändern der in der Regel lochförmig ausgeführten Auslassdüsen kommt es dabei immer wieder zu Ansammlungen und Verkrustungen von Kunststoffmaterial, insbesondere bei Einsatz von Kunststoffen mit einem hohen Anteil von Additiven. Die Ansammlungen können bei stärkerer Verkrustung dazu führen, dass ein Polymerstrang an der betreffenden Auslassdüse abreist und somit die Weiterleitung in der Fertigungslinie für den betreffenden Polymerstrang unterbrochen ist. Zur Vermeidung eines Material- und Zeitverlustes ist es daher erforderlich, den unterbrochenen Polymerstrang so schnell wie möglich wieder in die Fertigungslinie einzubinden, was in der Regel manuelle Tätigkeit erfordert.

Zur Vermeidung der dargestellten Verkrustungen oder Anwachsungen von Kunststoffmaterial an den Auslassdüsen der Düsenplatte sieht die Erfindung daher vor, die Düsenplatte an den Auslassdüsen mit einem Fluidstrahl, insbesondere Luft oder Stickstoff, so zu besprühen, dass die ungewünschten Verkrustungen erst gar nicht entstehen können oder weitestgehend verhindert werden. Sollte es dennoch zu einem Strangabriss kommen, vermeidet der Gegenstand der Erfindung eine längere Ausfallzeit, indem auf einfache Weise der Arbeitsraum vor der Düsenplatte zur erneuten Einbindung eines abgerissenen Polymerstrangs in den Fertigungslauf vorübergehend freigegeben werden kann.

Die Erfindung sieht vor, ein von dem Formwerkzeug 1 unabhängiges, aber diesem ortsfest zugeordnetes Gestell 4 zu verwenden, in dem ein Modul aufgenommen ist, das eine schlitzförmige Verteilerdüse enthält, die in eine Arbeitsstellung und eine Ruhestellung verschiebbar ist, wobei die Verteilerdüse in Arbeitsstellung einen Luftstrom auf die Düsenplatte, insbesondere deren Austrittsdüsen, richtet und in Ruhestellung aus dem Bereich der Düsenplatte entfernbar ist, um bei Strangabriss einen erforderlichen manuellen Zugang zur Düsenplatte zu ermöglichen.

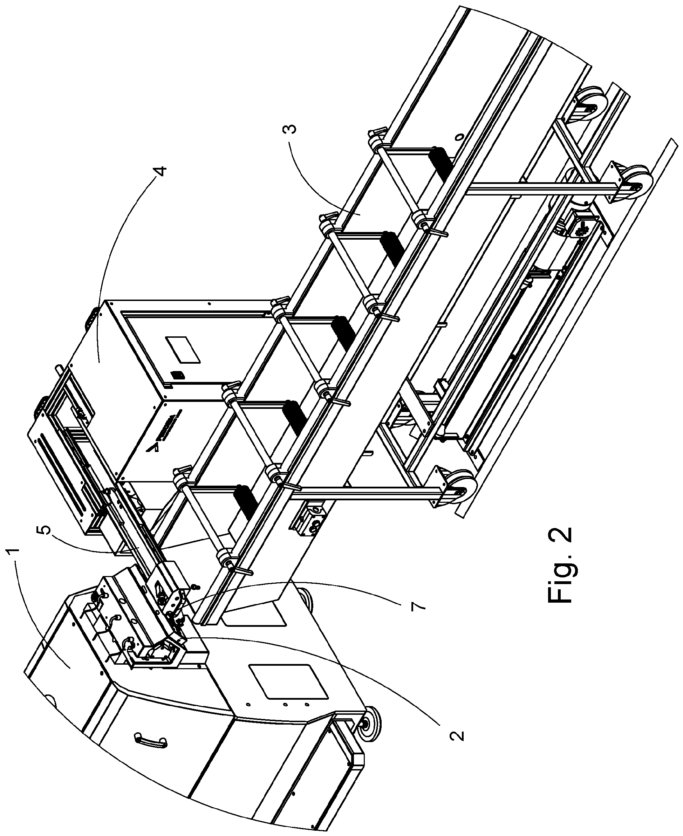

Figur 2 zeigt den Ausschnitt A von Figur 1 in isometrischer vergrößerter Ansicht. Das Gestell 4 enthält eine Verschiebeeinrichtung 5, an deren äußerem Ende die Verteilerdüse 7 angeordnet ist. In der Darstellung befindet sich das Gestell 4 an der seitlichen Rückseite des Wasserbades 3, wobei die Verteilerdüse 7 sich in der ausgezogenen Arbeitsstellung der Verschiebeeinrichtung 5 oberhalb des Wasserbades 3 und oberhalb der Polymerstränge vor der Düsenplatte befindet.

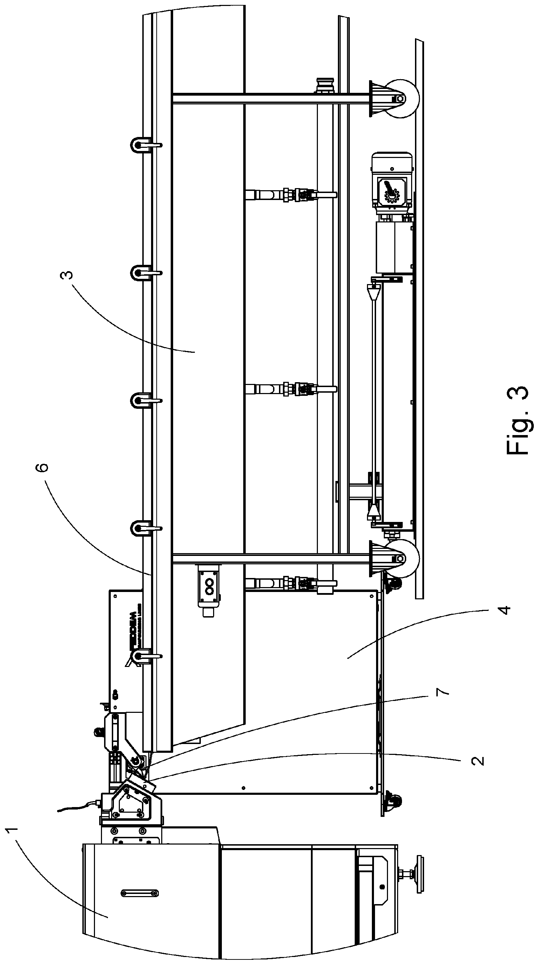

Figur 3 zeigt eine Seitenansicht des Ausschnitts A aus Figur 1. Die Darstellung verdeutlicht die Anordnung der Verteilerdüse 7 gegenüber der Düsenplatte 2 und den Verlauf eines Polymerstrangs 6 beim Auslauf aus der Düsenplatte 2 und dem Übergang in das Wasserbad 3.

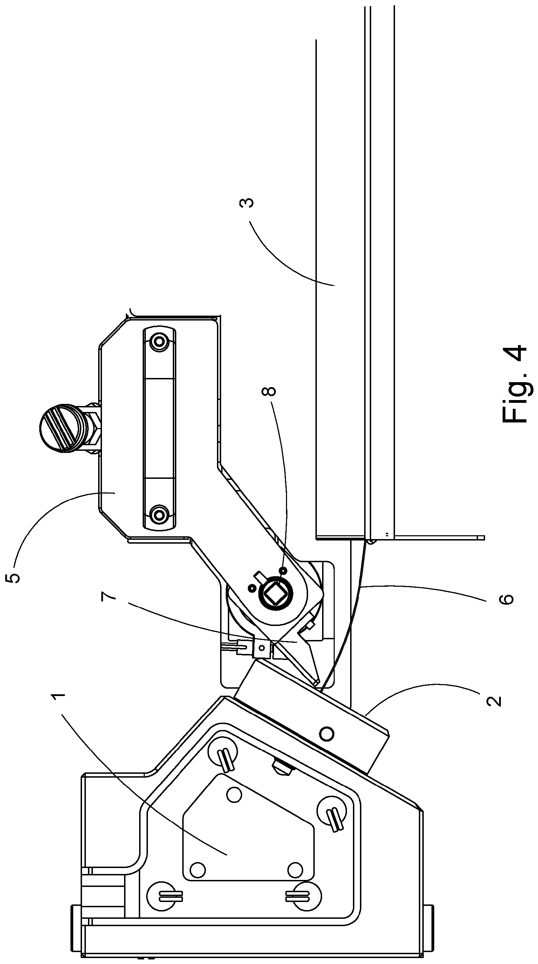

Eine weitergehende Detailansicht zeigt Figur 4. Das Formwerkzeug enthält an seinem Ende die Düsenplatte 2, aus der der Polymerstrang 6 im rechten Winkel austritt und dann im Bogen in das Wasserbad 3 einläuft. Im oberen Zwickel zwischen Düsenplatte 2 und Faserstrang 6 befindet sich der Auslass der mit einem Auslassspalt versehenen Verteilerdüse 7, die einen Luftstrom auf die Auslassdüsen in der Düsenplatte 2 richtet. Der Luftstrom weist eine Temperatur auf, die etwas oberhalb der Schmelztemperatur des jeweils verwendeten Kunststoffmaterials liegt. Die Austrittsgeschwindigkeit des Luftstroms aus der Verteilerdüse ist so gewählt, dass von dem Luftstrom an den Auslassdüsen der Düsenplatte anhaftende Verkrustungen oder Ablagerungen einerseits weggeblasen werden, der aber andererseits nicht so stark ist, dass der Luftstrom einen Polymerstrang zerreißen könnte.

Der Anstellwinkel der Verteilerdüse gegenüber der Düsenplatte ist mittels eines Einstellbolzens 8 variabel einstellbar und lässt sich individuell optimieren.

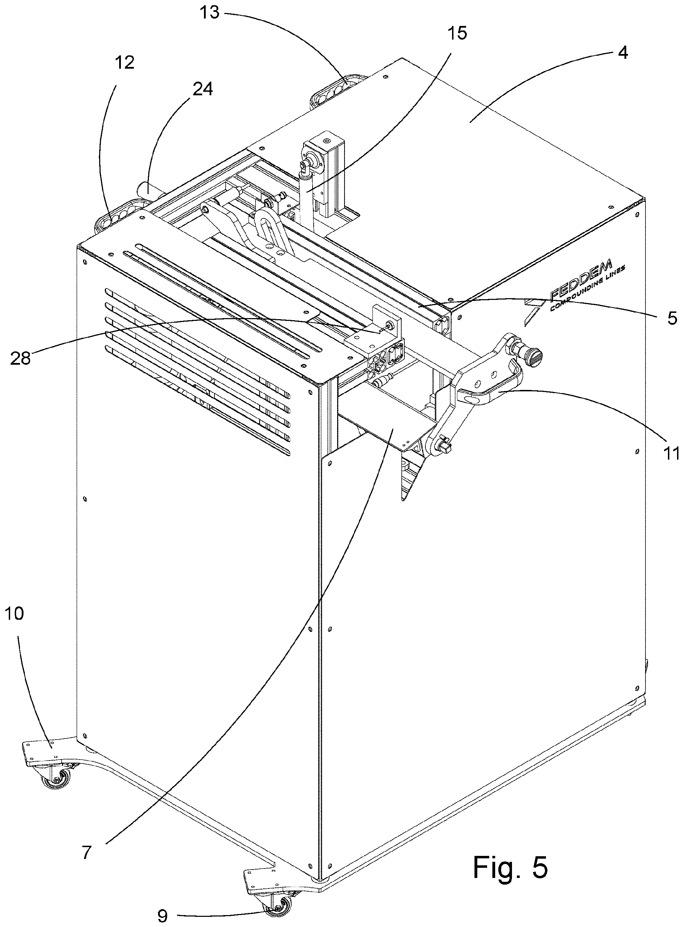

In Figur 5 ist das Gestell 4 mit eingefahrener Verteilerdüse 7 dargestellt. Das Gestell ist über sperrbare Rollen 9 fahrbar ausgebildet und kann der Fertigungslinie ohne konstruktive Verbindung ortsfest zugeordnet werden. Bei Bedarf kann jedoch auch eine mechanische Verbindung zwischen Gestell 4 und Formwerkzeug 1 hergestellt werden. Durch die Ausfahrbarkeit der Verteilerdüse ist im Normalbetrieb das Gestell nur einmalig seitlich und in der Höhe an das Formwerkzeug 1 anzupassen. Mit Hilfe von Handgriffen 12 und 13 kann das Gestell bei gelösten Rollen 9 manövriert werden. Der Handgriff 11 dient allein der Verschiebung der Verschiebeeinrichtung 5, die die Verteilerdüse 7 enthält, zwischen der Ruhestellung und der Arbeitsstellung, in der die Verteilerdüse 7 gegen die Düsenplatte 2 gerichtet ist.

Über eine Kurbel 24 lässt sich die Höhe des Gestells gegenüber dem Formwerkzeug 1 einstellen, wobei das Gestell 4 gegenüber der Bodenplatte 10 des Gestells 4 anhebbar oder absenkbar ist. Die Gasdruckfeder 15 dient dazu, die Verschiebeeinrichtung 5 in ihrer Ruhestellung festzulegen, wobei die Gasdruckfeder bei Ausziehen der Verschiebeeinrichtung gespannt wird.

Der Einzugsweg der Verteilerdüse in das Gestell wird durch einen Anschlag 28 begrenzt, der nach Bedarf im Rahmengestell 16 verschiebbar ist, um je nach Einsatz der Einrichtung den Einzugsweg so einstellen zu können, dass der jeweils erforderliche Arbeitsbereich vor der Austrittsplatte am Formwerkzeug in Ruhestellung der Verteilerdüse freigehalten bleibt.

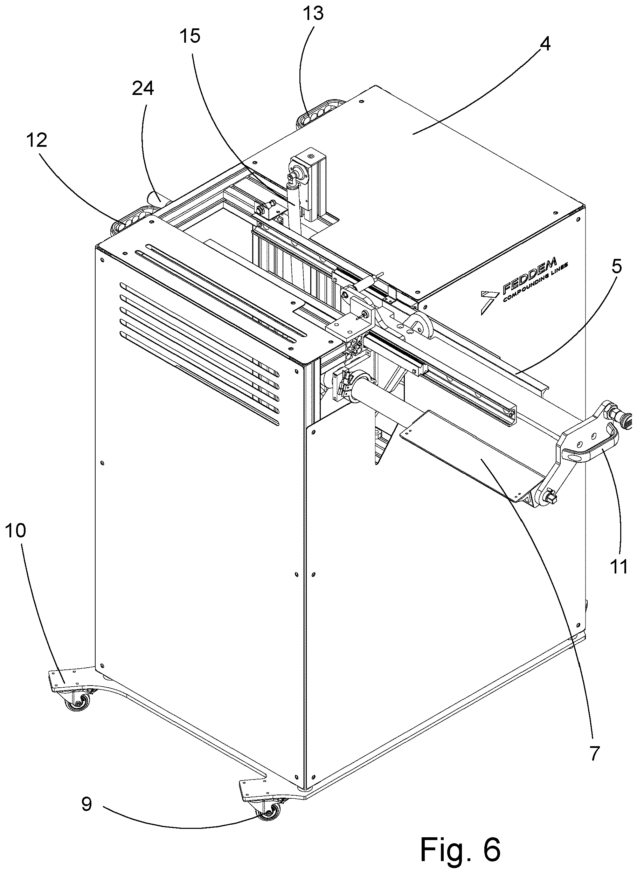

Figur 6 zeigt das Gestell 4 in einer Ansicht entsprechend Figur 5, jedoch mit ausgezogener Verteilerdüse 7.

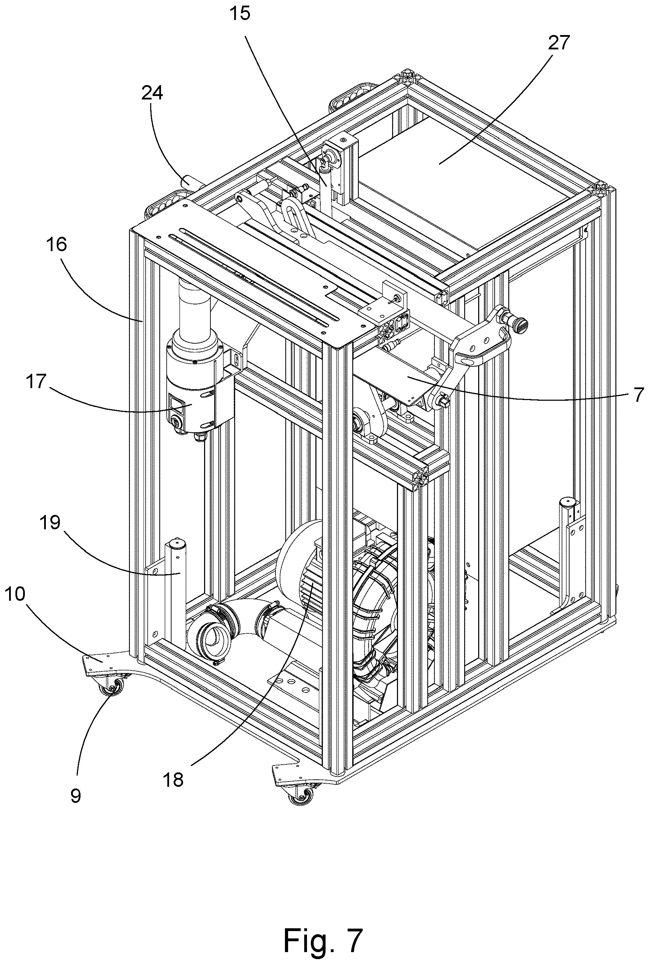

In Figur 7 ist das Gestell 4 als Rahmengestell 16 mit entfernten Verkleidungsplatten dargestellt. Die Höheneinstellung des Gestells erfolgt über die Kurbel 24, die auf eine hydraulische Hubvorrichtung 25 mit Hubzylindern 19 einwirkt, die an den Ecken des Rahmengestells ausgebildet sind und zwischen Rahmengestell 4 und Bodenplatte 10 wirken.

Auf der Bodenplatte 10 ist das Gebläse 18 befestigt, dessen Auslass über eine nicht dargestellte flexible Wellrohrverbindung mit dem Einlass der Heizeinrichtung 17 verbunden ist. Der Auslass der Heizeinrichtung führt über eine feste, aber drehbare Rohrverbindung 22 unmittelbar auf die Verteilerdüse 7.

Das Gebläse 18 ist über eine Steuereinrichtung im Steuerschrank 27 derart einstellbar, dass die tatsächliche Leistung des Gebläses 18 in Verbindung mit der Heizeinrichtung 17 so einstellbar ist, dass nach Einschaltung des Gebläses die Temperatur an der Verteilerdüse in möglichst kurzer Zeit einen Wert erreicht, der oberhalb der Schmelztemperatur des zu verarbeitenden Kunststoffs liegt. Dazu wird das Gebläse in Abhängigkeit von der jeweilig erreichten Temperatur an der Verteilerdüse 7 vorzugsweise in Stufen hochgeschaltet.

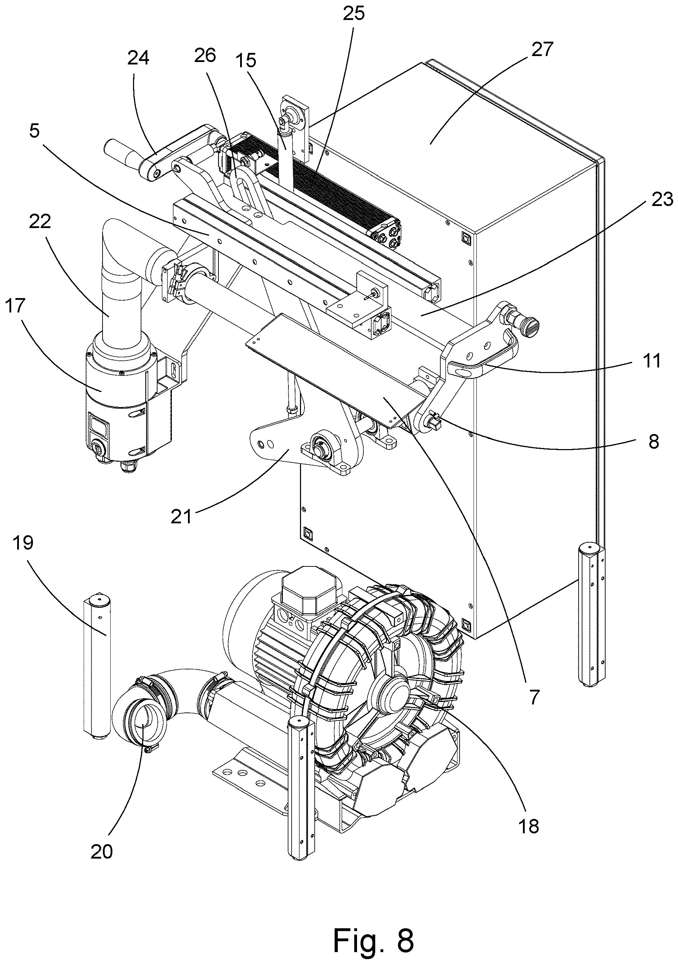

Figur 8 zeigt die Darstellung der Figur 7 unter Weglassung der Darstellung des Rahmengestells. Die Ansicht zeigt die Verteilerdüse 7 im Ruhezustand, in dem sich die Verteilerdüse 7 zusammen mit der Heizeinrichtung 17 im zurückgezogenen Zustand befindet. Das Gebläse 18 ist sowohl im ausgezogenen als auch im zurückgezogenen Zustand der Verteilerdüse 7 ortsfest auf der nicht dargestellten Bodenplatte angeordnet. Da der Auslass 20 des Gebläses über eine flexible, insbesondere als flexibles Wellrohr ausgeführte Schlauchverbindung mit dem Einlass der Heizeinrichtung verbunden ist, bleibt die Verbindung von Gebläse 18 und Heizeinrichtung 17 im Ruhezustand und im Arbeitszustand der Verteilerdüse bestehen.

Die Darstellung verdeutlicht die Art der verwendeten Verschiebeeinrichtung, die als doppelter Linearauszug ausgebildet ist, bei der die Halteplatte 23, die an ihrem einen Ende die Verteilerdüse und die Heizeinrichtung trägt, über horizontal verlaufende Linearführungen im Gestell 4 verschiebbar ist. Ein Ansatz der Halteplatte 23 greift in einen Spalt 26 eines Schwenkhebels 21 ein, der im Gestell 4 schwenkbar gelagert ist. Ein Schenkel des Schwenkhebels steht mit der Gasfeder 15 in Verbindung, deren gegenüberliegendes Ende im Gestell 4 befestigt ist. Wenn der Schwenkhebel 21 durch Ausziehen der Halteplatte 23 bewegt wird, wird die Gasfeder 15 zusammengedrückt. In der ausgezogenen Endstellung der Halteplatte 23 befindet sich die Gasfeder 15 im gespannten Zustand, so dass die Halteplatte 23 und damit auch die Verteilerdüse 7 bei Lösung einer mechanischen Sperre durch die Kraft der Gasfeder 15 selbsttätig in die Ruhestellung bewegt werden.

Die Figur 8 zeigt auch die auf die Hubzylinder 19 wirkende Hubvorrichtung 25, die über die Kurbel 24 der Einstellung der vertikalen Position des Gestells 4 dient. Während die vertikale Position durch die Hubvorrichtung 25 einstellbar ist, wird die horizontale Position durch Verschiebung des Gestells mittels der Rollen 9 erreicht. Damit kann eine genaue Positionierung der Verteilerdüse 7 in Bezug auf die Düsenplatte des Formwerkzeugs 1 hergestellt werden, wodurch sich auch der Vorteil ergibt, dass das Gestell 4 mit der Verteilerdüse 7 leicht an unterschiedlich ausgebildete Formwerkzeuge und örtliche Gegebenheiten anpassbar ist.

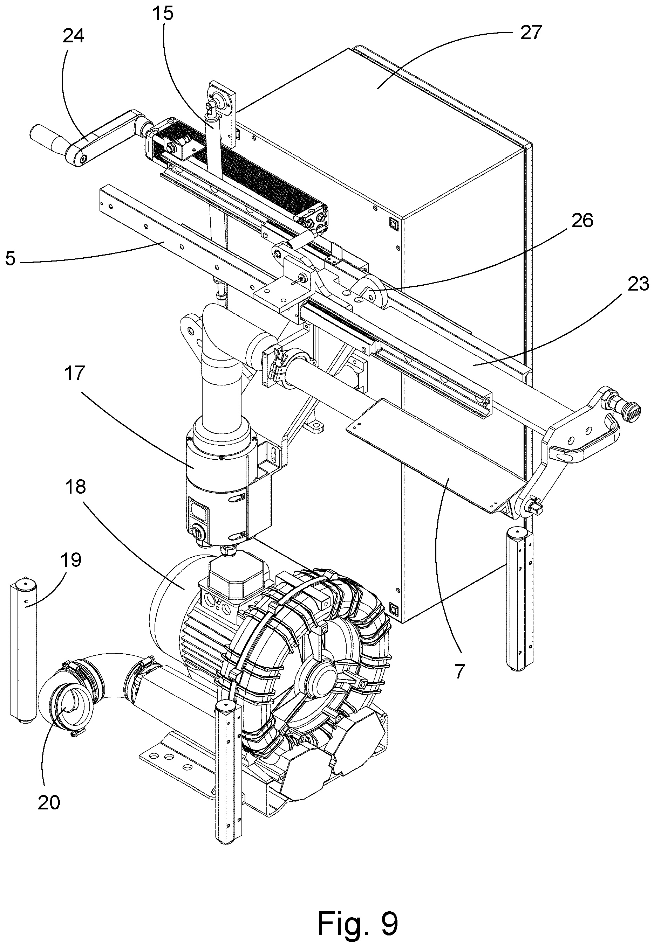

Figur 9 zeigt eine äquivalente Ansicht zu Figur 8, in der sich die Verteilerdüse 7 im ausgezogenen Zustand befindet. Gegenüber der Darstellung in Figur 8 ist lediglich die Halteplatte 23 zusammen mit der Verteilerdüse 7, die Rohrverbindung 22 und der Heizeinrichtung 17 als gemeinsames Modul aus dem Gestell ausgezogen dargestellt. Durch die flexible Verbindung der Heizeinrichtung 17 mit dem Gebläse 18 bleibt deren Verbindung auch im ausgezogenen Zustand unverändert.

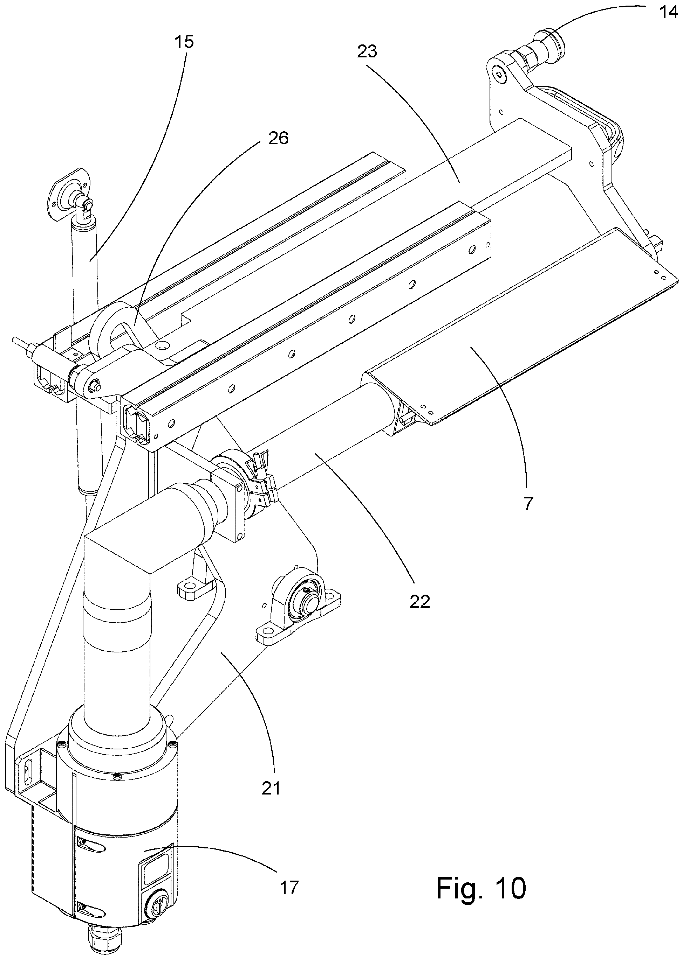

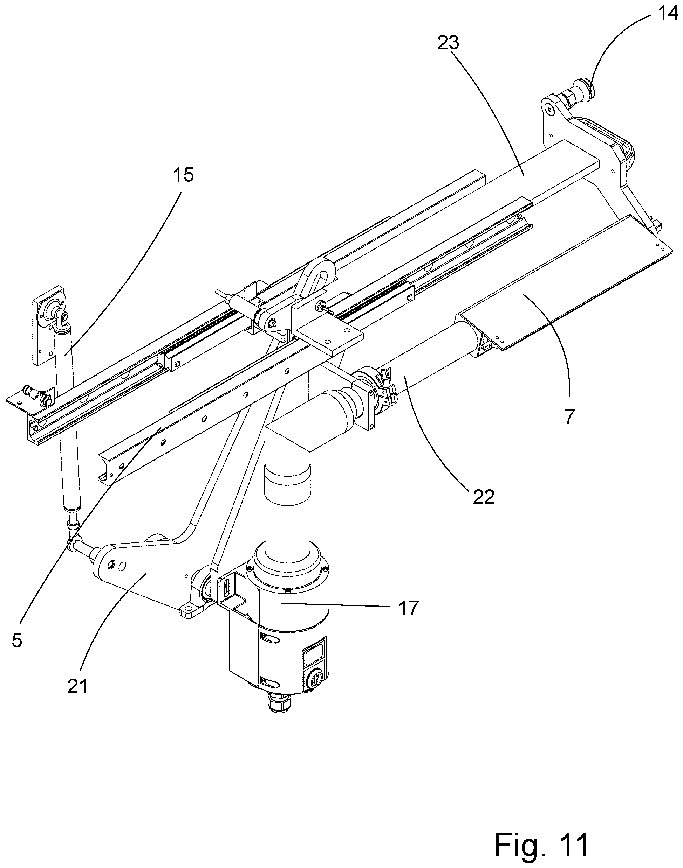

Die Figuren 10 und 11 zeigen das Modul, bestehend aus Halteplatte 23, Verteilerdüse 7 und Heizeinrichtung 17 in weiterem Umfang als isolierte Darstellungen im zurückgezogenen bzw. ausgezogenen Zustand. Figur 11 zeigt dabei insbesondere den Schwenkhebel 21, der in Verbindung mit der Gasfeder 15 steht. Die Figuren zeigen auch den Bedienungsknopf 14, der dazu dient, die Sperre zur Freigabe der Arbeitsstellung der Verschiebeeinrichtung freizugeben. Über eine Verbindung des Bedienungsknopfes 14 mit einem entsprechenden Betätigungsknopf auf der gegenüberliegenden Seite des Gestells kann die Rückführung der Verteilerdüse in die Ruhestellung von beiden Seiten der Fertigungslinie durchgeführt werden.

Die Verteilerdüse 7 enthält zur Bildung des Austrittspalts ein oberes Teil und ein in kleinem Abstand zum oberen Teil angeordnetes unteres Teil. Das untere Teil ist austauschbar. Je nach gewünschter Breite des Austrittsspalts kann daher ein unteres Teil gewählt werden, das so geformt ist, dass damit der Austrittsspalt auf die gewünschte Breite begrenzt ist. Das untere Teil kann durch geeignete Formgebung zusätzlich so ausgebildet sein, dass der Volumenstrom über die gesamte Breite des Austrittsspalts gleich bleibt.

Die Temperatur des Luftstroms am Düsenaustritt beträgt in einem Ausführungsbeispiel 300°C - 400°C. Dieser Wert kann aufgrund einer Heizleistung der Heizeinrichtung von 9 kW innerhalb von ca 2,5 Minuten erreicht werden. Der Volumenstrom des Gebläses beträgt dabei 20 - 30 m3/H bei einem Gebläse mit einer Maximalleistung von 2,2 kW. Die Erfindung ist auch in Spezialfällen einsetzbar, in denen ein kalter Luftstrom zum Lösen von Ablagerungen gewünscht ist.

### Bezugszeichen

- 1: Formwerkzeug
- 2: Düsenplatte
- 3: Wasserbad
- 4: Gestell mit Schlitzdüse
- 5: Verschiebeeinrichtung
- 6: Polymerstränge
- 7: Verteilerdüse
- 8: Einstellbolzen
- 9: Rolle
- 10: Bodenplatte
- 11: Handgriff
- 12: Handgriff
- 13: Handgriff
- 14: Bedienknopf
- 15: Gasfeder
- 16: Rahmengestell
- 17: Heizeinrichtung
- 18: Gebläse
- 19: Hubzylinder
- 20: Anschluss
- 21: Schwenkhebel
- 22: Rohrverbindung
- 23: Halteplatte
- 24: Kurbel
- 25: Hubvorrichtung
- 26: Spalt
- 27: Steuerschrank
- 28: Anschlag

## Patentansprüche

1. Verfahren zur Herstellung von Polymersträngen mittels eines Formwerkzeugs (1), aus dem eine Mehrzahl von parallel geführten Polymersträngen über eine Reihe von in einer Düsenplatte (2) des Formwerkzeugs (1) aufgenommenen Austrittsdüsen ausgetragen werden, wobei der die Austrittsdüsen enthaltende Bereich der Düsenplatte (2) mittels eines aus einer Heizeinrichtung (17) austretendenden gasförmigen Fluids erhitzt wird,
**dadurch gekennzeichnet,**
**dass** die Temperatur des Fluids über der Schmelztemperatur des Polymerkunststoffes liegt, wobei die Sprührichtung des aus einer schlitzförmigen Verteilerdüse (7) austretenden Fluids derart eingestellt ist, dass die Sprühebene des Fluids oberhalb der Ebene der Polymerstränge (6) im spitzen Winkel zur Ebene der Düsenplatte (2) und im spitzen Winkel zur Ebene der Polymerstränge (6) verläuft, und
**dass** die Verteilerdüse (7) in einem dem Formwerkzeug (1) zugeordneten Gestell (4) aufgenommen ist, das dem Formwerkzeug (1) ortsfest zugeordnet werden kann, wobei die Verteilerdüse (2) zwischen einer Betriebsstellung zur Besprühung des Bereichs der Austrittsdüsen und einer Ruhestellung innerhalb des Gestells (4) derart verlagerbar ist, dass in der Ruhestellung der Bereich der Austrittsdüsen von der Verteilerdüse (7) freigehalten ist.

2. Verfahren nach Anspruch 1,
**dadurch gekennzeichnet,**
**dass** das Fluid aus einem Gebläse (18) ausgeblasen wird, dem eine Heizeinrichtung (17) nachgeschaltet ist, wobei das Gebläse (18) derart steuerbar ist, dass bei Eintritt in die Betriebsstellung der Verteilerdüse (7) die Aufheizzeit des Fluids zur Erreichung einer gegebenen Solltemperatur minimiert ist.

3. Verfahren nach Anspruch 1,
**dadurch gekennzeichnet,**
**dass** das Fluid Luft oder Stickstoff ist.

4. Verfahren nach Anspruch 1,
**dadurch gekennzeichnet,**
**dass** die Auftreffgeschwindigkeit des Fluids auf die Düsenplatte (2) und/oder die Temperatur des Fluids an der Düsenplatte (2) konstant gehalten sind.

5. Verfahren nach Anspruch 1,
**dadurch gekennzeichnet,**
**dass** die Auftreffgeschwindigkeit des Fluids auf die Düsenplatte (2) variabel einstellbar oder pulsierend steuerbar ist.

6. Verfahren nach Anspruch 1,
**dadurch gekennzeichnet,**
**dass** die Austrittsöffnung der Verteilerdüse (7) derart geformt ist, dass der aus der Verteilerdüse austretende Fluidstrom linienförmig oder strahlenförmig auf die Düsenplatte (2) auftrifft.

7. Verfahren nach Anspruch 1,
**dadurch gekennzeichnet,**
**dass** der den Bereich der Austrittsdüsen verlassende Fluidstrom über einen Auffangtrichter und nach Durchlauf durch eine Filtereinrichtung wenigstens zum Teil auf den Ansaugkanal des Gebläses zurückgeführt wird.

8. Vorrichtung zur Herstellung von Polymersträngen mittels eines Formwerkzeugs (1) zur Ausbildung einer Mehrzahl von parallel zueinander geführten Polymersträngen (6), wobei das Formwerkzeug (1) eine Düsenplatte (2) mit Austrittsdüsen aufweist, aus denen die Polymerstränge (6) das Formwerkzeug (1) verlassen,
**dadurch gekennzeichnet,**
**dass** eine Gebläseanordnung (18) vorgesehen ist, die eine schlitzförmige Verteilerdüse (7) zur Ausgabe eines Fluidstroms enthält, dessen Winkelstellung derart einstellbar ist, dass der Fluidstrom gegen die Austrittsdüsen der Düsenplatte (2) gerichtet werden kann, wobei die Gebläseanordnung (18) in einem Gestell (4) aufgenommen ist, das in Bezug auf das Formwerkzeug (1) ortsfest angeordnet werden kann, und
**dass** die Verteilerdüse (7) mittels einer schlittenförmigen Verschiebeeinrichtung (5) in eine erste Betriebsstellung verschiebbar ist, in der die Verteilerdüse (7) den austretenden Fluidstrom auf die Austrittsdüsen der Düsenplatte (2) richtet, und in eine zweite Betriebsstellung verschiebbar ist, in der die Verteilerdüse (7) bei abgeschaltetem Fluidstrom wenigstens zum Teil im Inneren des Gestells (4) aufgenommen ist.

9. Vorrichtung, geeignet zum Lösen von Ablagerungen an Auslassdüsen eines Formwerkzeugs (1) zur Ausbildung einer Mehrzahl von parallel zueinander geführten Polymersträngen, wobei das Formwerkzeug (1) eine Düsenplatte (2) mit Austrittsdüsen aufweist, aus denen die Polymerstränge (6) das Formwerkzeug (1) verlassen,
**dadurch gekennzeichnet,**
**dass** eine Gebläseanordnung (18) vorgesehen ist, die eine schlitzförmige Verteilerdüse (7) zur Ausgabe eines Fluidstroms enthält, der derart einstellbar ist, dass er gegen die Austrittsdüsen der Düsenplatte (2) gerichtet werden kann, wobei die Gebläseanordnung (18) in einem Gestell (4) aufgenommen ist, das in Bezug auf das Formwerkzeug (1) ortsfest angeordnet werden kann, und
**dass** die Verteilerdüse (2) mittels einer schlittenförmigen Verschiebeeinrichtung (5) in eine erste Betriebsstellung verschiebbar ist, in der die Verteilerdüse (7) den austretenden Fluidstrom auf die Austrittsdüsen der Düsenplatte (2) richtet, und in eine zweite Betriebsstellung verschiebbar ist, in der die Verteilerdüse (7) bei abgeschaltetem Fluidstrom wenigstens zum Teil im Inneren des Gestells (4) aufgenommen ist.

10. Vorrichtung nach Anspruch 8 oder 9,
**dadurch gekennzeichnet,**
**dass** das Gestell (4) ein Gebläse (18) enthält, das über eine flexible Rohrverbindung mit einer Heizeinrichtung (17) zur Erhitzung des von dem Gebläse erzeugten Fluidstroms verbunden ist, wobei die Heizeinrichtung (17) zur Ausgabe des erhitzten Fluidstroms über die Verteilerdüse (7) gekoppelt ist.

11. Vorrichtung nach Anspruch 8 oder 9,
**dadurch gekennzeichnet,**
**dass** die Verteilerdüse (7) als Breitschlitzdüse ausgebildet ist, deren Auslass-Fluidstrom über die gesamte Breite der Reihe der Austrittsdüsen der Düsenplatte (2) gerichtet werden kann.

12. Vorrichtung nach Anspruch 8 oder 9,
**dadurch gekennzeichnet,**
**dass** die Verteilerdüse eine Stellvorrichtung zur Einstellung der Austrittsbreite des Fluidstroms aus der Verteilerdüse enthält.

13. Vorrichtung nach Anspruch 8 oder 9,
**dadurch gekennzeichnet,**
**dass** der Anstellwinkel der Verteilerdüse (7) gegenüber der Düsenplatte einstellbar ist.

14. Vorrichtung nach Anspruch 8 oder 9,
**dadurch gekennzeichnet,**
**dass** das Gestell einen verstellbaren Anschlag (28) zur Begrenzung der Einzugslänge der Verteilerdüse in das Gestell aufweist.

15. Vorrichtung nach Anspruch 8 oder 9,
**dadurch gekennzeichnet,**
**dass** das Gestell rollbar und höhenverstellbar ausgebildet ist.

## Geänderte Patentansprüche

### Geänderte Patentansprüche gemäss Regel 137(2) EPÜ.

1. Vorrichtung zur Herstellung von Polymersträngen mittels eines Formwerkzeugs (1) zur Ausbildung einer Mehrzahl von parallel zueinander geführten Polymersträngen (6), wobei das Formwerkzeug (1) eine Düsenplatte (2) mit Austrittsdüsen aufweist, aus denen die Polymerstränge (6) das Formwerkzeug (1) verlassen,
**dadurch gekennzeichnet,**
**dass** eine Gebläseanordnung (18) vorgesehen ist, die eine schlitzförmige Verteilerdüse (7) zur Ausgabe eines Fluidstroms enthält, dessen Winkelstellung derart einstellbar ist, dass der Fluidstrom gegen die Austrittsdüsen der Düsenplatte (2) gerichtet werden kann, wobei die Gebläseanordnung (18) in einem Gestell (4) aufgenommen ist, das in Bezug auf das Formwerkzeug (1) ortsfest angeordnet werden kann, und
**dass** die Verteilerdüse (7) mittels einer schlittenförmigen Verschiebeeinrichtung (5) in eine erste Betriebsstellung verschiebbar ist, in der die Verteilerdüse (7) den austretenden Fluidstrom auf die Austrittsdüsen der Düsenplatte (2) richtet, und in eine zweite Betriebsstellung verschiebbar ist, in der die Verteilerdüse (7) bei abgeschaltetem Fluidstrom wenigstens zum Teil im Inneren des Gestells (4) aufgenommen ist.

2. Vorrichtung, geeignet zum Lösen von Ablagerungen an Auslassdüsen eines Formwerkzeugs (1) zur Ausbildung einer Mehrzahl von parallel zueinander geführten Polymersträngen, wobei das Formwerkzeug (1) eine Düsenplatte (2) mit Austrittsdüsen aufweist, aus denen die Polymerstränge (6) das Formwerkzeug (1) verlassen,
**dadurch gekennzeichnet,**
**dass** eine Gebläseanordnung (18) vorgesehen ist, die eine schlitzförmige Verteilerdüse (7) zur Ausgabe eines Fluidstroms enthält, der derart einstellbar ist, dass er gegen die Austrittsdüsen der Düsenplatte (2) gerichtet werden kann, wobei die Gebläseanordnung (18) in einem Gestell (4) aufgenommen ist, das in Bezug auf das Formwerkzeug (1) ortsfest angeordnet werden kann, und
**dass** die Verteilerdüse (2) mittels einer schlittenförmigen Verschiebeeinrichtung (5) in eine erste Betriebsstellung verschiebbar ist, in der die Verteilerdüse (7) den austretenden Fluidstrom auf die Austrittsdüsen der Düsenplatte (2) richtet, und in eine zweite Betriebsstellung verschiebbar ist, in der die Verteilerdüse (7) bei abgeschaltetem Fluidstrom wenigstens zum Teil im Inneren des Gestells (4) aufgenommen ist.

3. Vorrichtung nach Anspruch 1 oder 2,
**dadurch gekennzeichnet,**
**dass** das Gestell (4) ein Gebläse (18) enthält, das über eine flexible Rohrverbindung mit einer Heizeinrichtung (17) zur Erhitzung des von dem Gebläse erzeugten Fluidstroms verbunden ist, wobei die Heizeinrichtung (17) zur Ausgabe des erhitzten Fluidstroms über die Verteilerdüse (7) gekoppelt ist.

4. Vorrichtung nach Anspruch 1 oder 2,
**dadurch gekennzeichnet,**
**dass** die Verteilerdüse (7) als Breitschlitzdüse ausgebildet ist, deren Auslass-Fluidstrom über die gesamte Breite der Reihe der Austrittsdüsen der Düsenplatte (2) gerichtet werden kann.

5. Vorrichtung nach Anspruch 1 oder 2,
**dadurch gekennzeichnet,**
**dass** die Verteilerdüse eine Stellvorrichtung zur Einstellung der Austrittsbreite des Fluidstroms aus der Verteilerdüse enthält.

6. Vorrichtung nach Anspruch 1 oder 2,
**dadurch gekennzeichnet,**
**dass** der Anstellwinkel der Verteilerdüse (7) gegenüber der Düsenplatte einstellbar ist.

7. Vorrichtung nach Anspruch 1 oder 2,
**dadurch gekennzeichnet,**
**dass** das Gestell einen verstellbaren Anschlag (28) zur Begrenzung der Einzugslänge der Verteilerdüse in das Gestell aufweist.

8. Vorrichtung nach Anspruch 1 oder 2,
**dadurch gekennzeichnet,**
**dass** das Gestell rollbar und höhenverstellbar ausgebildet ist.

9. Verfahren zur Herstellung von Polymersträngen mittels einer Vorrichtung nach Anspruch 1 oder 2 mit einem Formwerkzeug (1), aus dem eine Mehrzahl von parallel geführten Polymersträngen über eine Reihe von in einer Düsenplatte (2) des Formwerkzeugs (1) aufgenommenen Austrittsdüsen ausgetragen werden, wobei der die Austrittsdüsen enthaltende Bereich der Düsenplatte (2) mittels eines aus einer Heizeinrichtung (17) austretendenden gasförmigen Fluids erhitzt wird,
**dadurch gekennzeichnet,**
**dass** die Temperatur des Fluids über der Schmelztemperatur des Polymerkunststoffes liegt, wobei die Sprührichtung des aus einer schlitzförmigen Verteilerdüse (7) austretenden Fluids derart eingestellt ist, dass die Sprühebene des Fluids oberhalb der Ebene der Polymerstränge (6) im spitzen Winkel zur Ebene der Düsenplatte (2) und im spitzen Winkel zur Ebene der Polymerstränge (6) verläuft, und
**dass** die Verteilerdüse (7) in einem dem Formwerkzeug (1) zugeordneten Gestell (4) aufgenommen ist, das dem Formwerkzeug (1) ortsfest zugeordnet werden kann, wobei die Verteilerdüse (2) zwischen einer Betriebsstellung zur Besprühung des Bereichs der Austrittsdüsen und einer Ruhestellung innerhalb des Gestells (4) derart verlagerbar ist, dass in der Ruhestellung der Bereich der Austrittsdüsen von der Verteilerdüse (7) freigehalten ist.

10. Verfahren nach Anspruch 9,
**dadurch gekennzeichnet,**
**dass** das Fluid aus einem Gebläse (18) ausgeblasen wird, dem eine Heizeinrichtung (17) nachgeschaltet ist, wobei das Gebläse (18) derart steuerbar ist, dass bei Eintritt in die Betriebsstellung der Verteilerdüse (7) die Aufheizzeit des Fluids zur Erreichung einer gegebenen Solltemperatur minimiert ist.

11. Verfahren nach Anspruch 9,
**dadurch gekennzeichnet,**
**dass** das Fluid Luft oder Stickstoff ist.

12. Verfahren nach Anspruch 9,
**dadurch gekennzeichnet,**
**dass** die Auftreffgeschwindigkeit des Fluids auf die Düsenplatte (2) und/oder die Temperatur des Fluids an der Düsenplatte (2) konstant gehalten sind.

13. Verfahren nach Anspruch 9,
**dadurch gekennzeichnet,**
**dass** die Auftreffgeschwindigkeit des Fluids auf die Düsenplatte (2) variabel einstellbar oder pulsierend steuerbar ist.

14. Verfahren nach Anspruch 9,
**dadurch gekennzeichnet,**
**dass** die Austrittsöffnung der Verteilerdüse (7) derart geformt ist, dass der aus der Verteilerdüse austretende Fluidstrom linienförmig oder strahlenförmig auf die Düsenplatte (2) auftrifft.

15. Verfahren nach Anspruch 9,
**dadurch gekennzeichnet,**
**dass** der den Bereich der Austrittsdüsen verlassende Fluidstrom über einen Auffangtrichter und nach Durchlauf durch eine Filtereinrichtung wenigstens zum Teil auf den Ansaugkanal des Gebläses zurückgeführt wird.
